# EUROPÄISCHE PATENTSCHRIFT

(11) **EP 3 342 547 B1**
(45) Veröffentlichungstag und Bekanntmachung des Hinweises auf die Patenterteilung: **25.08.2021**
(21) Anmeldenummer: 17150050.7
(22) Anmeldetag: 02.01.2017
(51) Int. Cl.: B25J 9/00

(54) **POSITIONIEREINHEIT**
POSITIONING UNIT
UNITÉ DE POSITIONNEMENT

(43) Veröffentlichungstag der Anmeldung: 04.07.2018
(73) Patentinhaber: Manz AG, 72768 Reutlingen (DE)
(72) Erfinder: FREUNDT, Dr. Martin, 73732 Esslingen (DE)
(74) Vertreter: Kohler Schmid Möbus Patentanwälte

(56) Entgegenhaltungen:
- EP-A1- 2 105 264
- DE-A1- 10 019 162
- DE-A1- 19 525 482
- US-A- 5 378 282

## Beschreibung

Die Erfindung betrifft eine Positioniereinheit, umfassend zwei Steuerschlitten und einen Arbeitsschlitten,
- wobei die zwei Steuerschlitten und der Arbeitsschlitten auf Strecken verfahrbar sind, die zueinander parallel verlaufen,
- wobei am Arbeitsschlitten ein Arbeitsarm an einem Arbeitsfußpunkt angelenkt ist und an den Steuerschlitten jeweils ein Steuerarm an jeweils einem Steuerfußpunkt angelenkt ist,
- wobei die Steuerarme an einer Steuerstelle des Arbeitsarms an diesem angelenkt sind, wobei die Steuerstelle eine vordefinierte Lambdadistanz d von einem ein Arbeitsstellen-Ende bildenden, dem Arbeitsfußpunkt weggewandten Ende des Arbeitsarms beabstandet ist, und
- die zwei Steuerfußpunkte und der Arbeitsfußpunkt ein Dreieck aufspannen.

### Geänderte Beschreibung

Eine solche Positioniereinheit ist aus der US 5,378,282 A bekannt.

Nachteilig bei der dort beschriebenen Positioniereinheit ist, dass die Realisierung einen verhältnismäßig hohen Konstruktionsaufwand erfordert, der mit hohen Herstellungskosten verbunden ist. Dies gilt umso mehr, je mehr Freiheitsgrade bzw. Achsen mittels des dort beschriebenen Prinzips realisiert werden.

Aus den Druckschriften DE 195 25 482 A1, DE 100 19 162 A1 sowie EP 2 105 264 A1 sind weitere Positioniereinheiten bekannt. Diesen liegt ein alternatives Funktionsprinzip zugrunde, bei dem unter anderem anstelle von an einem Arbeitsarm angelenkten Steuerarmen jeweils mehrere voneinander unabhängige Arbeitsarme zum Einsatz kommen.

Aufgabe der Erfindung ist es daher, eine gattungsgemäße Positioniereinheit zu verbessern.

Gelöst wird die Aufgabe durch eine Positioniereinheit, umfassend zwei Steuerschlitten und einen Arbeitsschlitten,
- wobei die zwei Steuerschlitten und der Arbeitsschlitten auf Strecken verfahrbar sind, die zueinander parallel verlaufen,
- wobei am Arbeitsschlitten ein Arbeitsarm an einem Arbeitsfußpunkt angelenkt ist und an den Steuerschlitten jeweils ein Steuerarm an jeweils einem Steuerfußpunkt angelenkt ist,
- wobei die Steuerarme an einer Steuerstelle des Arbeitsarms an diesem angelenkt sind, wobei die Steuerstelle eine vordefinierte Lambdadistanz d von einem ein Arbeitsstellen-Ende bildenden, dem Arbeitsfußpunkt weggewandten Ende des Arbeitsarms beabstandet ist, und
- die zwei Steuerfußpunkte und der Arbeitsfußpunkt ein Dreieck aufspannen,
- wobei wenigstens zwei Schlitten der zwei Steuerschlitten und des Arbeitsschlittens an einer gemeinsamen Führung verfahrbar angeordnet sind.

Somit kann ein und die gleiche Führung für mehrere Schlitten genutzt werden. Somit kann konstruktiv Material eingespart werden. Für eine Vielzahl von Bewegungen, die mit der Positioniereinheit ausgeführt werden, können sich mehrere Schlitten in entgegengesetzten Richtungen bewegen. In diesen Fällen können sich die durch die Schlitten ausgelösten Impulse gegenseitig kompensieren. Dadurch kann die Geschwindigkeit, mit der die Positioniereinheit betrieben wird, insgesamt gesteigert werden.

Insbesondere können die zwei Steuerschlitten und der Arbeitsschlitten an einer gemeinsamen Führung verfahrbar angeordnet sein.

Die Führung kann beispielsweise eine Führungsschiene aufweisen. An dieser können die zwei Steuerschlitten und/oder der Arbeitsschlitten verfahrbar angeordnet sein. An der Führungsschiene kann auch alternativ einer der beiden Steuerschlitten sowie der Arbeitsschlitten verfahrbar angeordnet sein.

Die Führung kann auch mehr als eine Führungsschiene aufweisen. Beispielsweise kann die Führung aus wenigstens zwei miteinander verbundenen Führungsschienen gebildet sein. Dann kann die Führung aus den einzelnen Führungsschienen vorgefertigt und anschließend einfacher in die Positioniereinheit eingebaut werden. Auch können Steuer- und/oder Arbeitsschlitten an mehreren Führungsschienen angreifen, wodurch die Stabilität der Positioniereinheit verbessert werden kann. So können beispielsweise zwei der drei Schlitten, insbesondere die zwei Steuerschlitten, an einer oberen Führungsschiene und der dritte Schlitten, insbesondere der Arbeitsschlitten, an einer unteren Führungsschiene verfahrbar angeordnet sein.

Auch kann die Führung aus einem vorzugsweise länglichen Teil, beispielsweise einer Motorkomponente oder einem Teil eines Messsystems, gebildet sein, das von wenigstens zwei Schlitten gemeinsam genutzt wird. Die Führung kann insbesondere durch einen Stator eines Linearmotors gebildet sein.

Die Lambdadistanz d kann mindestens 10 % der Gesamtlänge des Arbeitsarms betragen. Die Lambdadistanz d kann mindestens genauso lang wie ein Steuerarm, bei unterschiedlich langen Steuerarmen vorzugsweise mindestens so lang wie der längste Steuerarm, sein. Dadurch kann ein Arbeitsraum der Positioniereinheit bis an das Ende der Führung nutzbar bzw. durch die Positioniereinheit erreichbar sein.

Der Arbeitsfußpunkt kann an einer Fußplatte des Arbeitsschlittens angeordnet sein. Die Fußplatte kann beispielsweise am Arbeitsschlitten angeordnet sein. Alternativ kann die Fußplatte auch durch den Arbeitsschlitten gebildet sein. Dann kann auf besonders einfache Weise sichergestellt werden, dass die zwei Steuerfußpunkte und der Arbeitsfußpunkt zu jedem Zeitpunkt bzw. in jeder Stellung der Steuerschlitten und des Arbeitsschlittens ein Dreieck aufspannen. Dazu kann insbesondere vorgesehen sein, dass der Arbeitsfußpunkt auf der Fußplatte des Arbeitsschlittens außerhalb einer Verbindungslinie der Steuerfußpunkte angeordnet ist.

Die Positionen des Arbeitsfußpunktes auf der Fußplatte und/oder der Steuerfußpunkte können auch in Abhängigkeit von auftretenden und/oder zu erwartenden Kräften bzw. Momenten gewählt werden.

Denkbar ist auch, dass anstelle oder ergänzend zur Fußplatte des Arbeitsschlittens an einem oder mehreren Steuerschlitten ebenfalls Platten angeordnet bzw. von diesen ausgebildet sind. Die Platten bzw. die Fußplatten können direkt oder mittelbar auch an mehreren Führungsschienen verfahrbar angeordnet sein, um die Stabilität der Positioniereinheit noch weiter zu verbessern.

Auch kann vorgesehen sein, dass am Arbeitsstellen-Ende des Arbeitsarms eine Arbeitseinheit angeordnet ist.

Die Arbeitseinheit kann beispielsweise eine Halterung sein oder eine solche aufweisen. Beispielsweise kann die Halterung eine Werkzeughalterung sein. Die Arbeitseinheit kann auch ein Werkzeug oder eine Werkzeugkomponente aufweisen oder als solche ausgebildet sein. Beispielsweise können eine Laserbearbeitungskomponente, insbesondere ein Laserbearbeitungskopf, und/oder eine Greifvorrichtung als Arbeitseinheit vorgesehen sein.

Auch kann vorgesehen sein, dass ein sich wenigstens mittelbar an der Führung abstützender Stützarm, vorzugsweise ein erster und ein zweiter Stützarm, mit dem Arbeitsstellen-Ende des Arbeitsarms und/oder mit der Arbeitseinheit verbunden, vorzugsweise daran angelenkt, ist.

Beispielsweise kann der Stützarm die Arbeitseinheit zusätzlich abstützen. Dazu kann der Stützarm mit seinem anderen Ende ebenfalls am Arbeitsschlitten bzw. an der Fußplatte des Arbeitsschlittens angelenkt sein. Besonders vorteilhaft ist es, wenn der Stützarm relativ zu wenigstens einem anderen Schlitten verfahrbar angeordnet ist. Insbesondere kann der Stützarm mittels eines Stützschlittens verfahrbar an der Führung angeordnet sein.

Besonders vorteilhaft ist es, wenn der erste und der zweite Stützarm eine Parallelogramm-Mechanik bilden. Dadurch kann sichergestellt werden, dass die Arbeitseinheit eine konstante Ausrichtung relativ zur Führung bzw. zu einer Führungsschiene der Führung beibehält.

Auch können mehrere Stützarme an mehreren Stützschlitten verfahrbar an der Führung angeordnet sein. Somit wird es möglich, mehr als drei Achsen über die Positioniereinheit anzusteuern. Insbesondere lassen sich dadurch auf besonders einfache Weise durch Hinzufügen beispielsweise von weiteren Stützarmen vier-, fünf- oder sechsachsige Positioniereinheiten realisieren.

Denkbar ist auch, dass der Stützarm als flexibles Zugelement, vorzugsweise als Metallband, ausgebildet ist. Das flexible Zugelement kann als Band, insbesondere als Band aus elastisch verformbarem Material, oder als Zugseil ausgebildet sein. Das flexible Zugelement kann beispielsweise ein Federstahlband sein. Allgemein kann vorteilhafterweise das flexible Zugelement aus einem steifen, insbesondere in Winkelbewegungen elastisch verformbaren Material gebildet sein. Weiterhin ist es denkbar, dass der Stützarm als druckstabiles Band ausgebildet ist.

Durch ein solches flexibles Zugelement kann die Anzahl benötigter Gelenke reduziert werden, wodurch sich Kostenvorteile zusätzlich realisieren lassen. Besonders günstig ist es, ein solches flexibles Zugelement vorzusehen, wenn relativ zu anderen Gelenken vergleichsweise wenige Bewegungen zu erwarten sind. Dabei kann ausgenutzt werden, dass ein solches flexibles Zugelement ebenso wie die Stützarme auf Zug belastet sein können. Werden wenigstens zwei Stützarme als flexible Zugbänder ausgebildet, so lässt sich mit diesen besonders kostengünstig eine Parallelogramm-Mechanik realisieren. Es ist auch möglich, andere Arme als den Stützarm als flexibles Zugelement auszubilden. Beispielsweise ist es denkbar, ein oder mehrere der Steuerarme als flexibles Zugelement auszubilden. Insbesondere ist denkbar, mittels zweier flexibler Zugelemente einen Arm zu ersetzen, wobei Druckkräfte auf einen anderen Arm, beispielsweise den Arbeitsarm, abgeleitet werden.

Wenigstens zwei Schlitten können an einem Basisschlitten angeordnet sein, wobei die wenigstens zwei Schlitten relativ zueinander verfahrbar sind. Beispielsweise können die zwei Steuerschlitten und der Arbeitsschlitten an einem gemeinsamen Basisschlitten angeordnet sein. Auch kann der Basisschlitten durch einen der Schlitten gebildet werden, wobei ein anderer Schlitten an diesem Basisschlitten relativ zum Basisschlitten verfahrbar angeordnet sein kann. Somit wird es möglich, den Basisschlitten entlang der Führung zu verfahren und damit einen besonders großen Arbeitsraum der Positioniereinheit abzudecken. Zur Feinpositionierung des Arbeitsendes bzw. der Arbeitseinheit genügt es dann, den bzw. die jeweiligen Schlitten relativ zum Basisschlitten zu verfahren. Beispielsweise wird dadurch ein Transportsystem ermöglicht, das einen leistungsstarken Antrieb für den Basisschlitten vorsieht, um Transportgut über eine weite Strecke zu transportieren, wobei beispielsweise entlang weiterer Achsen das Transportgut mit schwächeren, dafür kostengünstigeren Antrieben der entsprechenden Schlitten fein positionierbar ist.

Denkbar ist auch, dass die Positioniereinheit eine Impulsentkopplungseinheit, insbesondere zur Entkopplung bzw. Kompensation eines Rückstoßimpulses, aufweist. Beispielsweise kann vorgesehen sein, dass die Impulsentkopplungseinheit zur Entkopplung bzw. Kompensation von Rückstoßimpulsen wenigstens eines Steuer- und/oder Arbeitsschlittens und von an diesen angeordneten Massen bzw. zur Entkopplung der jeweiligen Gegenstücke, an denen sich der bzw. die Schlitten jeweils zur Beschleunigung abstößt bzw. abstoßen, ausgebildet ist. Durch eine solche Impulsentkopplungseinheit können Rückstoßimpulse, die durch Beschleunigungen der Schlitten bzw. der an diesen angeordneten Massen entstehen und sonst auf die Umgebung übertragen würden, wesentlich reduziert werden. Dadurch kann die Belastung insbesondere eines die Positioniereinheit tragenden Gestells reduziert werden. Auch kann dadurch die Positioniereinheit mit noch weiter gesteigerten Beschleunigungen und/oder verbesserten Ruckwerten betrieben werden.

Denkbar ist auch, dass die Positioniereinheit eine, vorzugsweise einstellbare, Gewichtskompensationseinheit aufweist. Die Gewichtskompensationseinheit kann beispielsweise ausgebildet sein, Gewichtskräfte der Schlitten und/oder der Arbeitseinheit zu kompensieren. Die Gewichtskompensationseinheit kann ein Federelement aufweisen. Auch kann die Gewichtskompensationseinheit eine Hydraulik oder Pneumatik aufweisen.

Besonders bevorzugt ist es, wenn die Gewichtskompensationseinheit einstellbar ist, sodass die Gewichtskompensationseinheit beispielsweise auf unterschiedliche Arbeitseinheiten bzw. deren Massen abgestimmt werden kann.

Denkbar ist auch, dass wenigstens eine Anlenkung mittels eines vorgespannten, d. h. spielfreien Lagers ausgebildet ist. Auch kann vorgesehen sein, wenigstens eine weitere Lagerstelle und/oder eine Führungskomponente, beispielsweise eine Führungsschiene, der Positioniereinheit spielfrei auszubilden, wodurch die Positioniergenauigkeit der Positioniereinheit weiter verbessert werden kann.

Unter Anlenkung ist dabei jeweils eine Vorrichtung zu verstehen, mit der ein jeweils angelenktes Element der Positioniereinheit an einem jeweils anderen Element der Positioniereinheit angelenkt wird. Insbesondere können die Anlenkungen Gelenke der Positioniereinheit sein. Durch die spielfreie Lagerung kann die Präzision der Positioniereinheit, mit der das Arbeitsende bzw. die Arbeitseinheit positioniert werden können, weiter verbessert werden. Besonders bevorzugt kann dabei eine Anlenkung mittels eines Kreuzrollenlagers, insbesondere eines spielfrei vorgespannten Kreuzrollenlagers, ausgebildet sein. Ein Kreuzrollenlager ist dabei in der Lage, auch Querkräfte und Momente sicher und spielfrei aufzunehmen.

Es kann vorgesehen sein, dass wenigstens ein Schlitten mittels eines Linearmotors verfahrbar ist, wobei vorzugsweise das stromdurchflossene Motorteil (der verfahrbare Läufer) des Linearmotors am Schlitten angeordnet ist. Ein Linearmotor ermöglicht besonders schnelle und präzise Bewegungen. Der Linearmotor kann als Synchronmotor oder als Asynchronmotor ausgebildet sein.

Dabei kann es vorgesehen sein, dass ein, beispielsweise als Magnetschiene mit magnetischen Bereichen wechselnder Polarisierungsrichtung ausgebildeter, stromloser Stator des Linearmotors parallel zur Führung angeordnet ist. Insbesondere kann sich der stromlose Stator des Linearmotors entlang der Führung erstrecken. Mit anderen Worten kann die Ausdehnung des stromlosen Stators des Linearmotors entsprechend der Länge der Führung gewählt werden. Vorteilhafterweise kann vorgesehen sein, dass die bzw. eine Führungsschiene der Führung als stromloser Stator ausgebildet ist bzw. der Stator in die Führung integriert ist. Auch hierdurch lässt sich der Materialaufwand konstruktiv reduzieren.

Es ist jedoch alternativ auch denkbar, anstelle des verfahrbaren Läufers den Stator bzw. das ortsfeste Motorteil des Linearmotors zu bestromen. Dadurch kann auf flexibel verformbare Energieführungen zur Stromversorgung des verfahrbaren Läufers verzichtet werden.

Wenigstens zwei Schlitten können gemeinsam eine Komponente der Positioniereinheit nutzen, z. B. mittels einer gemeinsamen Motorkomponente verfahrbar sein. Beispielsweise können wenigstens zwei Schlitten mittels eines Linearmotors verfahrbar sein, wobei ein Teil des Linearmotors mehrfach verwendet werden kann. Bei mehreren Schlitten können insbesondere die jeweiligen stromdurchflossenen Motorteile mit demselben stromlosen Stator zusammenwirken. Somit kann der stromlose Stator mehrfach verwendet werden und gleichzeitig ein besonders großer, durch die Positioniereinheit nutzbarer Arbeitsraum zur Verfügung gestellt werden. Somit kann eine weitere Materialeinsparung realisiert werden.

Da im Wesentlichen nur die stromdurchflossenen Motorteile der Linearmotoren zu bewegen sind, kann die bewegte Masse deutlich reduziert werden. Dadurch lässt sich die Geschwindigkeit bzw. Dynamik der Positioniereinheit noch weiter erhöhen.

Auch können noch weitere Komponenten gemeinsam genutzt werden. Beispielsweise können am stromlosen Stator, insbesondere gemeinsam nutzbare, Magnetstreifen vorgesehen sein. Auch können beispielsweise Maßverkörperungen oder Positionssensoren, insbesondere zur Positionsbestimmung eines Schlittens, entlang der Führung bzw. entlang des stromlosen Stators angeordnet sein, die beispielsweise zur Positionsbestimmung der verschiedenen Schlitten und somit mehrfach genutzt werden können. Auch elektrische oder Signal-Leitungen können gemeinsam genutzt werden.

Die Stromversorgungen der stromdurchflossenen Motorteile können dazu mittels flexibler Energieführungen mit Strom versorgt werden. Dabei kann beispielsweise ein Hauptkabelschlepp zum Arbeitsschlitten führen und jeweils ein kleiner Kabelschlepp vom Arbeitsschlitten zu einem anderen Schlitten führen.

Denkbar ist auch, Leistungsverstärker für stromdurchflossene Motorteile, wie Spulen, auf dem jeweiligen Schlitten anzuordnen.

Denkbar ist ferner, dass wenigstens ein Schlitten beispielsweise pneumatisch oder hydraulisch angetrieben wird. Allgemein können unterschiedliche Schlitten durch unterschiedliche Antriebe angetrieben sein.

Auch kann ein Schlitten, beispielsweise der Basisschlitten, durch einen Zahnriemen angetrieben werden, wodurch die zu bewegende Masse für den Antrieb des Basisschlittens minimiert werden kann. Anstelle von oder ergänzend zu Zahnriemen können auch Zahnstangen oder Spindeln, insbesondere solche mit hoher Steigung, vorgesehen sein.

Auch ein solcher Zahnriemen kann durch wenigstens zwei Schlitten gemeinsam genutzt werden.

Denkbar ist auch, dass die Positioniereinheit eine vorzugsweise als Rechnereinheit ausgebildete Steuerungseinheit aufweist, die ausgebildet ist, die Steuer- und/oder Arbeitsschlitten derart entlang der Führung zu verfahren, dass das Arbeitsstellen-Ende zu einer vordefinierbaren Raum-Position innerhalb eines Arbeitsraumes der Positioniereinheit gelangt. Dazu kann die Steuerungseinheit eine Computerprogramm-Komponente aufweisen, die eine beispielsweise in kartesischen Koordinaten angegebene vordefinierte Position, an die die Arbeitseinheit bzw. das Arbeitsende verlagert werden soll, zu Endpositionen umrechnet, an die die jeweiligen Schlitten zu verfahren sind. Die Steuerungseinheit kann weiter ausgebildet sein, aus der jeweiligen Ist-Position der jeweiligen Schlitten und der jeweiligen Endposition der jeweiligen Schlitten Steuerimpulse vorzuberechnen und zu generieren, durch die dann die Schlitten in die jeweiligen Endpositionen verfahren werden.

Denkbar ist auch, dass wenigstens einer der Arme längenverstellbar ist. Beispielsweise kann ein Steuerarm längenverstellbar sein. Die Längenverstellung des längenverstellbaren Arms kann motorisch angetrieben sein. Dadurch kann die Geschwindigkeit, mit der eine vorgegebene Position des Arbeitsendes bzw. der Arbeitseinheit angefahren wird, weiter erhöht werden. Auch kann dadurch der abdeckbare Arbeitsbereich der Positioniereinheit weiter vergrößert werden oder die Konfiguration des Systems für einen alternativen Arbeitspunkt angepasst werden. Durch die Anlenkung der Steuerarme an einer mit der vordefinierten Lambdadistanz d von dem Arbeitsstellen-Ende beabstandeten Steuerstelle bildet zusammen mit dem Arbeitsarm eine so genannte Lambda-Kinematik. Insbesondere kann eine drei- oder höher dimensionale Lambda-Kinematik gebildet werden, indem die entsprechende Anzahl von Achsen bzw. Schlitten vorgesehen wird. Durch Wahl der Lambdadistanz d lässt sich dabei die Auslenkungsensitivität, mit der die Steuerarme den Arbeitsarm steuern, einstellen. Daher kann in einer besonders vorteilhaften Ausführung der Erfindung vorgesehen sein, dass die Steuerstelle voreinstellbar entlang des Arbeitsarms verlagert werden kann. Beispielsweise können Gelenke, durch die die Steuerarme an der Steuerstelle am Arbeitsarm angelenkt sind, über ein gemeinsames Justierelement miteinander verbunden sein. Das Justierelement kann dazu entlang des Arbeitsarms verlagerbar angeordnet sein. Beispielsweise kann das Justierelement ein Innengewinde aufweisen, das in ein sich über einen Bereich des Arbeitsarms entlang diesem erstreckendes Spindelgewinde eingreift und durch Verdrehen an diesem verlagert werden kann.

Mehrere Elemente der Positioniereinheit, insbesondere die Schlitten, können ähnlich oder gleich aufgebaut sein. Dadurch lassen sich höhere Stückzahlen gleicher bzw. ähnlicher Elemente in der Positioniereinheit einsetzen, wodurch Kosten durch Skaleneffekte weiter reduziert werden können. Insbesondere kann die Positioniereinheit als Baukasten-System konstruiert werden. Dazu können einzelne Elemente der Positioniereinheit standardisiert hergestellt werden. Insbesondere lassen sich auch mehrere Anlenkungen durch gleichartige Gelenke realisieren.

Je nach Anwendungsfall bzw. Einsatzbereich der Positioniereinheit lässt sich eine geringe Bauhöhe zumindest in Bezug auf eine Achsrichtung realisieren. Dadurch kann die Zugänglichkeit zum Arbeitsraum erweitert bzw. verbessert werden.

Es kann auch vorgesehen sein, mehrere Positioniereinheiten vorzusehen, die in den gleichen und/oder in sich überlappenden Arbeitsräumen arbeiten. Die Positioniereinheiten können insbesondere übereinander, nebeneinander, in einem Winkel zueinander, z. B. L-förmig oder mit einem Durchgang, oder gegenüberliegend angeordnet sein. Sind sie übereinander oder nebeneinander angeordnet, können mehrere Positioniereinheiten dieselbe Führung teilen, wodurch sich weitere Kosteneinsparungen realisieren lassen.

Mehrere Positioniereinheiten können dieselbe Führung nutzen, insbesondere können Schlitten unterschiedlicher Positioniereinheiten entlang derselben Führung verfahrbar sein. Für einige Applikationen können Schlitten überlappend gemeinsam aber mikroskopisch unabhängig bewegbar sein.

Die erfindungsgemäße Positioniereinheit kann insbesondere in Handhabungssystemen, Bearbeitungsmaschinen, beispielsweise Laserbearbeitungsmaschinen, Bestückungsmaschinen und dergleichen eingesetzt werden.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigen, sowie aus den Ansprüchen.

Die einzelnen Merkmale können je einzeln für sich oder zu mehreren in beliebigen Kombinationen bei Varianten der Erfindung verwirklicht sein. In der schematischen Zeichnung sind Ausführungsbeispiele der Erfindung dargestellt, welche in der nachfolgenden Beschreibung näher erläutert werden.

Es zeigen:
- Fig. 1: eine erste Positioniereinheit in perspektivischer Ansicht;
- Fig. 2: eine schematisierte Darstellung einer zur Positioniereinheit der Fig. 1 analog aufgebauten Positioniereinheit;
- Fig. 3: eine dritte Positioniereinheit mit vier steuerbaren Achsen in schematischer Darstellung;
- Fig. 4: eine vierte Positioniereinheit mit vier steuerbaren Achsen in schematischer Darstellung;
- Fig. 5: eine schematische Darstellung einer durch flexible Zugelemente gebildeten Parallelogramm-Mechanik;
- Fig. 6: eine schematische Darstellung einer Impulsentkopplungseinheit;
- Fig. 7: eine schematische Darstellung einer Gewichtskompensationseinheit.

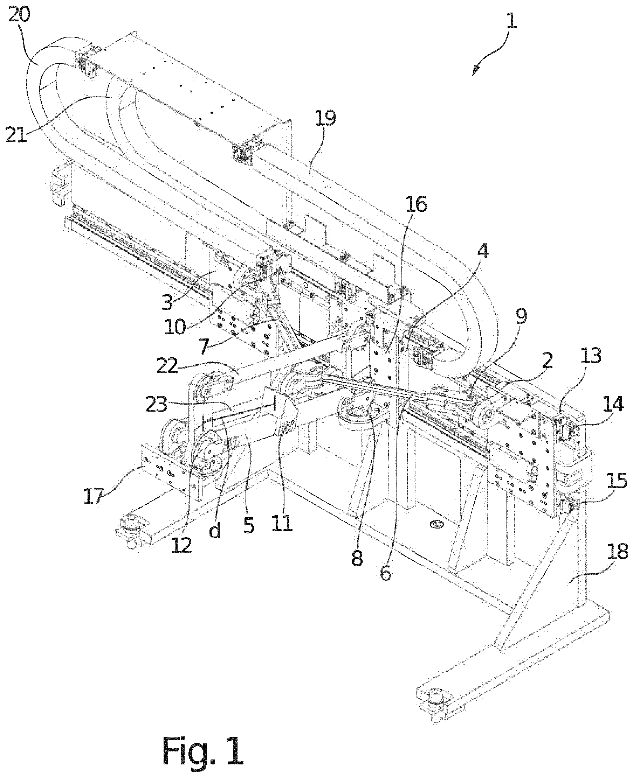

Die Fig. 1 zeigt eine erste Positioniereinheit 1 in perspektivischer Darstellung. Zu erkennen sind zwei Steuerschlitten 2, 3 und ein Arbeitsschlitten 4. Am Arbeitsschlitten 4 ist an einem Arbeitsfußpunkt 8 ein Arbeitsarm 5 angelenkt. An Steuerfußpunkten 9, 10 sind Steuerarme 6, 7 an den Steuerschlitten 2 bzw. 3 angelenkt.

Die Steuerarme 6, 7 sind des Weiteren an einer Steuerstelle 11 gelenkig mit dem Arbeitsarm 5 verbunden. Die Steuerstelle 11 weist dazu ein mit einem Drehgelenk kombiniertes Kreuzgelenk auf.

Die Steuerstelle 11 ist von einem Arbeitsstellen-Ende 12 des Arbeitsarms 5 mit einer Lambdadistanz d beabstandet. Dabei entspricht das Arbeitsstellen-Ende 12 dem nicht am Arbeitsschlitten 4 bzw. am Arbeitsfußpunkt 8 angelenkten Ende des Arbeitsarms 5. Am Arbeitsstellen-Ende 12 ist ferner eine Arbeitseinheit 17 zu erkennen. Der Arbeitsschlitten 4 ist über den Arbeitsarm 5 und (um die y-Achse) drehmomentsteife und vorzugsweise spielfreie Gelenke verbunden. Andere Gelenke der Positioniereinheit können spielbehaftet ausgeführt werden. In diesem Ausführungsbeispiel ist die Arbeitseinheit 17 als Halterung ausgebildet, an der ein Werkzeug montiert werden kann. Die Steuerschlitten 2, 3 und der Arbeitsschlitten 4 sind verfahrbar an einer gemeinsamen Führung 13, insbesondere an ihren beiden Führungsschienen 14, 15 angeordnet. Die Führung 13 ist wiederum an einem Gestell 18 montiert.

Energieführungen 19, 20, 21 versorgen die Steuerschlitten 2, 3 sowie den Arbeitsschlitten 4 bzw. an diesen Schlitten zu deren Antrieb vorgesehene stromdurchflossene Motorteile von Linearmotoren mit Strom.

Als Gegenstück zu den stromdurchflossenen Motorteilen ist in die Führungsschiene 14 ein sich über die gesamte Führungsschiene 14 erstreckender, stromloser Stator integriert. Die stromdurchflossenen Motorteile und der stromlose Stator bilden somit jeweils Linearmotoren, mit denen die Steuerschlitten 2, 3 und der Arbeitsschlitten 4 verfahren werden können.

Des Weiteren sind noch zwei Stützarme 22, 23 zu erkennen, die jeweils an einer Fußplatte 16 des Arbeitsschlittens 4 sowie an der Arbeitseinheit 17 angelenkt sind.

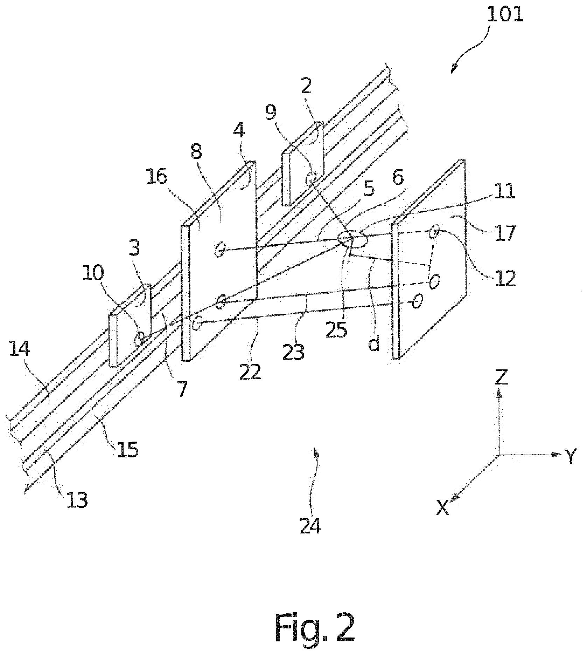

Die Fig. 2 zeigt eine stark schematisierte Darstellung einer Positioniereinheit 101, die ähnlich wie die Positioniereinheit 1 aufgebaut ist. Es werden daher dieselben Bezugszeichen wie in der Fig. 1 für die jeweils sich entsprechenden Elemente verwendet.

In der Fig. 2 ist insbesondere zu erkennen, dass die Positioniereinheit 101 die Stützarme 22, 23 aufweist, die einerseits an der Fußplatte 16 und andererseits an der Arbeitseinheit 17 angelenkt sind. Die Positioniereinheit 101 weicht von der Positioniereinheit 1 (Fig. 1) insbesondere dadurch ab, dass bei der Positioniereinheit 101 beide Stützarme 22, 23 unterhalb des Arbeitsarms 5 angeordnet sind.

Die Stützarme 22, 23 bilden eine Parallelogramm-Mechanik.

Außerdem bilden die Stützarme 22, 23 mit dem Arbeitsarm 5 eine Parallelogramm-Mechanik.

Die Anlenkungen sind in diesem Ausführungsbeispiel durch Gelenke gebildet.

Des Weiteren ist in der Fig. 2 angedeutet, dass die Arbeitseinheit 17 in drei Richtungen x, y, z verfahrbar ist. Somit bildet die Positioniereinheit 101 ein dreiachsiges System.

Um die Arbeitseinheit 17 dazu jeweils in die x-, y- und/oder z-Richtung zu verfahren, können folgende drei Grundbewegungsmodi miteinander kombiniert werden.

Ein erster Grundbewegungsmodus ergibt sich, indem die Steuerschlitten 2, 3 zueinander gegenläufig bewegt werden, während der Arbeitsschlitten 4 unbewegt bleibt. Dies führt zu einer bahnschrankenartigen Bewegung des Arbeitsarms 5, wodurch sich die Arbeitseinheit 17 auf einer kreisförmigen Bahn in der durch die y- und z-Richtung aufgespannten Ebene verlagert.

Ein zweiter Grundbewegungsmodus ergibt sich daraus, dass die Steuerschlitten 2, 3 in eine jeweils gleiche Richtung relativ zum Arbeitsschlitten 4 verlagert werden. Dadurch wird die Arbeitseinheit 17 im Wesentlichen - insbesondere bei entsprechend gewählter Relativgeschwindigkeit der Steuerschlitten 2, 3 zueinander - in der durch die x- und y-Richtung aufgespannten Ebene verlagert.

Ein dritter Grundbewegungsmodus, der zu einer ausschließlichen Bewegung der Arbeitseinheit 17 entlang der x-Richtung führt, ergibt sich daraus, dass alle drei Schlitten, d. h. die Steuerschlitten 2, 3 und der Arbeitsschlitten 4 mit gleicher Geschwindigkeit entlang der Führung 13 verfahren werden.

Durch Kombination dieser drei Grundbewegungsmodi können somit vordefinierte Positionen innerhalb eines Arbeitsraums 24 wahlfrei mit der Arbeitseinheit 17 bzw. dem Arbeitsstellen-Ende 12 angefahren bzw. erreicht werden.

Die Steuerstelle 11 ist um die Lambdadistanz d von dem Arbeitsstellen-Ende 12 beabstandet. Durch Wahl der Position der Steuerstelle 11 entlang des Arbeitsarms 5 bzw. durch Wahl der Lambdadistanz d lässt sich die Empfindlichkeit einstellen, mit der Steuerbewegungen der Steuerschlitten 2, 3 zu Verlagerungen der Arbeitseinheit 17 bzw. des Arbeitsstellen-Endes 12 führen.

In diesem Ausführungsbeispiel ist dazu vorgesehen, dass der Arbeitsarm 5 bereichsweise ein (in Fig. 1 und Fig. 2 nicht näher dargestelltes) Spindelgewinde aufweist. Die Steuerstelle 11 weist ein Justierelement 25 mit einem Innengewinde auf, welches entlang des Spindelgewindes durch Verdrehen verlagerbar ist.

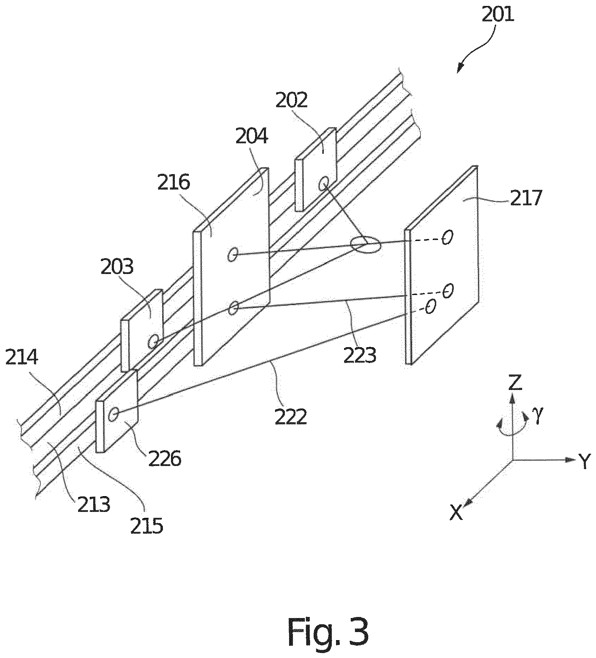

Die Fig. 3 zeigt nun eine weitere Positioniereinheit 201. Die Positioniereinheit 201 ist weitgehend analog zur Positioniereinheit 101 der Fig. 2 aufgebaut, sodass im Folgenden nur die Besonderheiten der Positioniereinheit 201 beschrieben werden.

Die Positioniereinheit 201 ist als vierachsiges System ausgebildet. Zusätzlich zu der Bewegung einer Arbeitseinheit 217, die der Arbeitseinheit 17 im Wesentlichen entspricht, in x-, y- und/oder z-Richtung kann die Arbeitseinheit 217 zusätzlich um die z-Richtung entsprechend der Drehrichtung y verschwenkt werden.

Dazu weist die Positioniereinheit 201 wiederum zwei Steuerschlitten 202, 203 sowie zwei Stützarme 222, 223 auf. Im Gegensatz zum Ausführungsbeispiel der Fig. 2 stützt sich dabei jedoch nur einer der beiden Stützarme, insbesondere der Stützarm 223, an einer Fußplatte 216 eines Arbeitsschlittens 204 ab bzw. ist an diesem angelenkt.

Der andere Stützarm 222 ist dagegen an einem Stützschlitten 226 angelenkt. In diesem Ausführungsbeispiel ist der Stützarm 222 beidenends mittels Kugelgelenken angelenkt. Der Stützschlitten 226 wiederum ist verfahrbar an einer Führung 213 mit zwei Führungsschienen 214, 215, insbesondere an der Führungsschiene 215, angeordnet. Steuerschlitten 202, 203 und der Arbeitsschlitten 204 sind an der gemeinsamen Führungsschiene 214 verfahrbar angeordnet.

Beide Stützarme 222, 223 sind weiterhin an der Arbeitseinheit 217 angelenkt. Somit bilden die beiden Stützarme 222, 223 nun keine Parallelogramm-Mechanik. Vielmehr kann der Stützschlitten 226 relativ zum Arbeitsschlitten 204 verfahren werden, wodurch die Arbeitseinheit 217 entsprechend der Drehrichtung y verschwenkt bzw. um die z-Richtung rotiert wird.

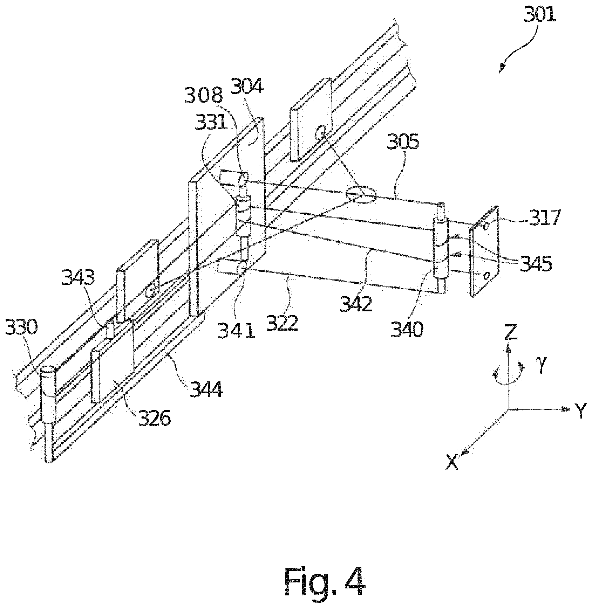

Fig. 4 zeigt nun als weiteres Ausführungsbeispiel eine Positioniereinheit 301. Die Positioniereinheit 301 ist im Wesentlichen analog zu der vorbeschriebenen Positioniereinheit 201 als vierachsiges System aufgebaut. Im Gegensatz zur Positioniereinheit 201 wird jedoch die Steuerung der vierten Achse entsprechend der Drehrichtung y durch eine Drahtseilmechanik realisiert. Im Folgenden werden daher zum Verständnis der Funktionsweise der Drahtseilmechanik die wesentlichen Unterschiede zwischen den Positioniereinheiten 201 und 301 beschrieben.

Die Positioniereinheit 301 weist eine Arbeitseinheit 317 auf. Die Arbeitseinheit 317 ist über eine Schwenkrolle 340, einen Arbeitsarm 305 und einen Stützarm 322 an einem Arbeitsschlitten 304 angelenkt.

Dazu ist der Arbeitsarm 305 an einem vom Arbeitsschlitten 304 beabstandeten Arbeitsfußpunkt 308 angelenkt. Der Stützarm 322 ist an einem ebenfalls vom Arbeitsschlitten 304 beabstandeten Stützfußpunkt 341 angelenkt.

Mittels der Schwenkrolle 340 kann die Arbeitseinheit 317 entsprechend der Drehrichtung γ, d. h. entlang der z-Richtung relativ zum Arbeitsschlitten 304 verschwenkt werden. Dazu ist die Schwenkrolle 340 drehbar zwischen dem Arbeitsarm 305 und dem Stützarm 322 gelagert und die Arbeitseinheit 317 ist mit der Schwenkrolle 340 fest verbunden.

Ein Drahtseil 342 umläuft bzw. umschlingt die Schwenkrolle 340 in Schwenkrollennuten 345. Beide Enden des Drahtseils 342 sind an der Schwenkrolle 340 fixiert, wobei das Drahtseil 342 für einen präzisen Lauf mittels einer an der Schwenkrolle 340 angeordneten Spannschraube vorgespannt ist.

Die Schwenkrollennuten 345 dienen dabei insbesondere dazu, dass das Drahtseil 342 unabhängig von der Lage oder Position der Arbeitseinheit 317 sicher an der Schwenkrolle 340 geführt wird und insbesondere ein Abrutschen des Drahtseils 342 verhindert wird. Die Anzahl der Umschlingungen des Drahtseils 342 um die Schwenkrolle 340 ist in Abhängigkeit von dem gewünschten maximalen Winkelbereich der Rotation um die z-Achse gewählt. In diesem Ausführungsbeispiel umschlingt das Drahtseil 342 die Schwenkrolle 340 einmal.

Das Drahtseil 342 wird von der Schwenkrolle 340 weiter über eine indirekt am Arbeitsschlitten 304 drehbar angeordnete Umlenkrolle 331 und eine weitere Umlenkrolle 330 und dann von dieser wieder über die Umlenkrolle 331 zurück zur Schwenkrolle 340 geführt. Auch die Umlenkrolle 331 weist Nuten zur Führung des Drahtseils 342 auf.

Die Umlenkrolle 331 ist am Arbeitsfußpunkt 308 und am Stützfußpunkt 341 drehbar fixiert.

Die Umlenkrolle 330 ist über eine Verbindungsschiene 344 mit dem Arbeitsschlitten 304 fest verbunden, so dass diese bei Verlagerung des Arbeitsschlittens 304 mit diesem mit verlagert wird.

Zwischen Umlenkrolle 330 und Arbeitsschlitten 304 ist ein Stützschlitten 326 angeordnet, der insbesondere relativ zum Arbeitsschlitten 304 und zur Umlenkrolle 330 verlagerbar ist. Der Stützschlitten 326 weist eine Seilfixierung 343 auf, über die das Drahtseil 342 an wenigstens einer Stelle mit dem Stützschlitten 326 fest verbunden ist.

Durch Verlagern des Stützschlittens 326 relativ zum Arbeitsschlitten 304 bzw. zur Umlenkrolle 330 wird somit das Drahtseil 342 über die Seilfixierung 343 bewegt, wodurch wiederum die Schwenkrolle 340 gesteuert, insbesondere rotiert, wird. Dadurch schwenkt die Arbeitseinheit 317 entsprechend der Drehrichtung y.

Somit lässt sich auch in diesem Ausführungsbeispiel eine vierte Achse durch den Stützschlitten 326 steuern.

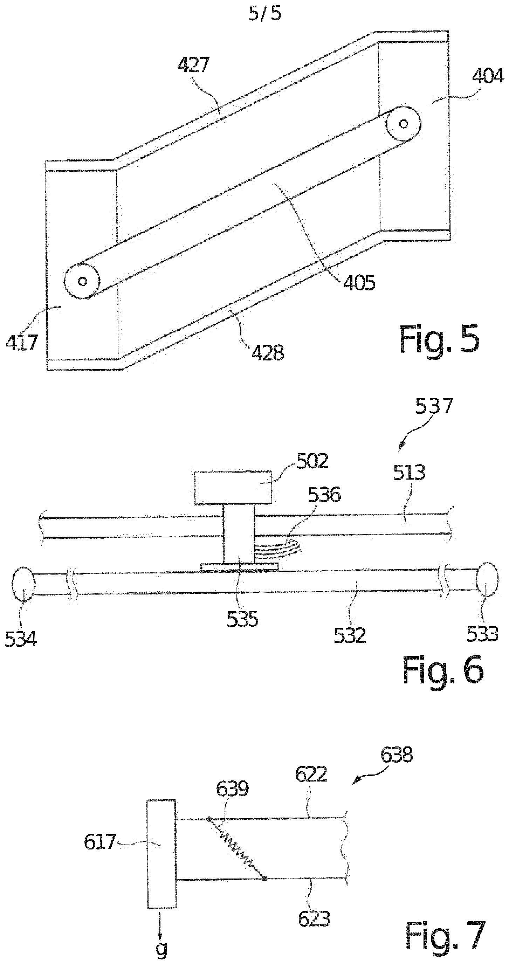

In einer alternativen Ausführung der Erfindung ist es vorgesehen, das Drahtseil lediglich um die dann drehfeste Umlenkrolle 331 und die Schwenkrolle 340 und nicht über die Umlenkrolle 330 zu führen. Dadurch lässt sich auf einfache und kostengünstige, alternative Weise die Arbeitseinheit 317 entsprechend einer Parallelogramm-Mechanik steuern. Die schematisierte Darstellung der Fig. 5 zeigt nun eine alternative Ausführung zweier Stützarme als flexible Zugelemente, mit denen eine Parallelogramm-Mechanik gebildet wird.

Zu erkennen ist in Seitenansicht ein Arbeitsschlitten 404, der mit einer Arbeitseinheit 417 über zwei Federstahlbänder 427, 428 verbunden ist. Die Federstahlbänder 427, 428 sind dabei aus elastischem Federstahl gebildet und bilden flexible Zugelemente. Ferner ist in der Fig. 5 zu erkennen, dass ein (druckbelastbarer) Arbeitsarm 405 an der Arbeitseinheit 417 sowie an dem Arbeitsschlitten 404 angelenkt ist.

Wird nun die Arbeitseinheit 417 relativ zum Arbeitsschlitten 404 in der Bildebene der Fig. 5 bewegt, so verbiegen die Federstahlbänder 427, 428, behalten dennoch ihre Zugwirkung bei. Somit wird eine Parallelogramm-Mechanik gebildet, wobei auf Gelenke für die Federstahlbänder 427, 428 verzichtet werden kann.

Die Fig. 6 zeigt nun in schematisierter Darstellung Aufbau und Funktionsweise einer Impuls-Entkopplungseinheit 537 einer Positioniereinheit.

Zu erkennen ist zunächst eine Führung 513, an der ein Schlitten, insbesondere ein Steuerschlitten 502, verfahrbar angeordnet ist. Zum Antrieb des Steuerschlittens 502 ist ein Linearmotor vorgesehen. Der Linearmotor wird durch einen stromlosen Stator 532, der einen Magnetstreifen mit regelmäßig angeordneten magnetischen Bereichen wechselnder Polarisationsrichtungen aufweist, und ein stromdurchflossenes Motorteil 535 gebildet. Der Stator 532 und das stromdurchflossene Motorteil 535 gleiten aneinander entlang und bilden zusammen einen Linearmotor.

Über eine Energieführung 536 wird das Motorteil 535 mit Strom versorgt.

Der Stator 532 ist an der Führung 513 entlang dieser verschiebbar gelagert.

Bei Beschleunigung des Steuerschlittens 502 stützt sich dieser kraftschlüssig an dem Stator 532 ab. Durch den Rückstoßimpuls wird der Stator 532 entgegen der Beschleunigungsrichtung des Steuerschlittens 502 beschleunigt. Um die absoluten Auslenkungen des Stators 532 gering zu halten, sind zusätzliche Massen 533, 534 vorgesehen. Diese weisen ein wesentlich höheres, insbesondere ein Vielfaches der Masse des Steuerschlittens 502 auf. Durch die Beweglichkeit des Stators 532 beschleunigen somit Rückstoßimpulse des Steuerschlittens 502 bzw. der daran angeordneten Massen den Stator 532 mit seinen Massen 533, 534. Ein die Positioniereinheit tragendes Gestell (in der Fig. 6 aus Vereinfachungsgründen nicht näher dargestellt) wird somit von den Rückstoßimpulsen entlastet.

Der Steuerschlitten 502 ist beispielhaft dargestellt für weitere Schlitten, insbesondere für einen weiteren Steuerschlitten und für einen Arbeitsschlitten, die analog zum Schlitten 502 entlang des Stators 532 verfahrbar angeordnet sind. Somit können mit der in Fig. 6 dargestellten Anordnung Rückstoßimpulse mehrerer Schlitten entkoppelt bzw. abgefangen werden.

Dabei weist die Positioniereinheit bei einer alternativen Ausführung zusätzlich ein Positionsmesssystem zur Erfassung der Position des Stators 532 auf. Mit diesem wird laufend die Position des Stators 532 erfasst bzw. überwacht, so dass das stromdurchflossenen Motorteil 535 abgestimmt auf die jeweilige Position des Magnetstreifens bzw. der Position der magnetischen Bereiche und ihrer jeweiligen Polarisationsrichtungen, angesteuert werden kann.

Die Fig. 7 zeigt nun noch ein Ausführungsbeispiel einer Gewichtskompensationseinheit 638.

In Seitenansicht ist eine Arbeitseinheit 617 zu erkennen. Durch die Masse der Arbeitseinheit 617 kommt es zu einer in die Schwerkraftrichtung g gerichteten Gewichtskraft. Diese gilt es zur Erreichung einer hohen Dynamik eines Positioniersystems und zur Entlastung der jeweiligen Antriebe zu kompensieren.

Die Funktionsweise der Kompensationseinheit 638 wird dabei beispielhaft anhand von zwei Stützarmen 622, 623, die eine Parallelogramm-Mechanik bilden, beispielhaft erläutert. Zu erkennen ist, dass ein Kompensationselement 639 zwischen den Stützarmen 622, 623 angeordnet ist. Das Kompensationselement 639 ist in diesem Ausführungsbeispiel als Druckfeder ausgebildet.

In einer alternativen Ausführung wird das Kompensationselement 639 durch in den Anlenkungen angeordneten Spiralfedern gebildet. In einer weiteren alternativen Ausführung ist das Kompensationselement 639 als pneumatischer Kolben ausgebildet.

Wird somit die Arbeitseinheit 617 entlang der Bildebene, d. h. in oder entgegen der Schwerkraftrichtung g und damit aus einer Nulllage heraus bewegt, wird das Kompensationselement 639 gespannt. Das Kompensationselement 639 arbeitet somit jeweils entgegen einer Auslenkung der Arbeitseinheit 617 aus ihrer Nulllage. Durch Vorspannung des Kompensationselements 639 lässt es sich insbesondere erreichen, dass sich die Arbeitseinheit 617 im Ruhezustand im Bereich ihrer Nulllage befindet. Im Falle der alternativen Ausführung als pneumatischer Kolben wird dazu durch Druckregulierung eine auf die jeweilige zu kompensierende Masse angepasste Ausgleichskraft hydraulisch erzeugt.

Das Gewicht der Arbeitseinheit 617 wird somit durch das Kompensationselement 639 zumindest teilweise kompensiert. Daneben kann so auch sichergestellt werden, dass in einer Notaus-Situation die Arbeitseinheit 617 zumindest in Richtung ihrer Nulllage zurückverlagert wird.

### Bezugszeichenliste:

- 1, 101, 201, 301: Positioniereinheit
- 2, 3, 202, 203, 502: Steuerschlitten
- 4, 204, 304, 404: Arbeitsschlitten
- 5, 305, 405: Arbeitsarm
- 6, 7: Steuerarm
- 8, 308: Arbeitsfußpunkt
- 9, 10: Steuerfußpunkt
- 11: Steuerstelle
- 12: Arbeitsstellen-Ende
- 13, 213, 513: Führung
- 14, 15, 214, 215: Führungsschiene
- 16, 216: Fußplatte
- 17, 217, 317, 417, 617: Arbeitseinheit
- 18: Gestell
- 19, 20, 21, 536: Energieführung
- 22, 23, 222, 223, 322, 622, 623: Stützarm
- 24: Arbeitsraum
- 25: Justierelement
- 226, 326: Stützschlitten
- 427, 428: Federstahlband
- 330, 331: Umlenkrolle
- 532: Stator
- 533, 534: Masse
- 535: Motorteil
- 537: Impulsentkopplungseinheit
- 638: Gewichtskompensationseinheit
- 639: Kompensationselement
- 340: Schwenkrolle
- 341: Stützfußpunkt
- 342: Drahtseil
- 343: Seilfixierung
- 344: Verbindungsschiene
- 345: Schwenkrollennut
- d: Lambdadistanz
- x, y, z: Richtungen
- y: Drehrichtung
- g: Schwerkraftrichtung

## Patentansprüche

1. Positioniereinheit (1, 101, 201, 301), umfassend zwei Steuerschlitten (2, 3, 202, 203, 502) und einen Arbeitsschlitten (4, 204, 304, 404),
- wobei die zwei Steuerschlitten (2, 3, 202, 203, 502) und der Arbeitsschlitten (4, 204, 304, 404) auf Strecken verfahrbar sind, die zueinander parallel verlaufen,
- wobei am Arbeitsschlitten (4, 204, 304, 404) ein Arbeitsarm (5, 305, 405) an einem Arbeitsfußpunkt (8, 308) angelenkt ist und an den Steuerschlitten (2, 3, 202, 203, 502) jeweils ein Steuerarm (6, 7) an jeweils einem Steuerfußpunkt (9, 10) angelenkt ist,
- wobei die Steuerarme (6, 7) an einer Steuerstelle (11) des Arbeitsarms (5, 305, 405) an diesem angelenkt sind, wobei die Steuerstelle (11) eine vordefinierte Lambdadistanz (d) von einem ein Arbeitsstellen-Ende (12) bildenden, dem Arbeitsfußpunkt (8, 308) weggewandten Ende des Arbeitsarms (5, 305, 405) beabstandet ist, und
- die zwei Steuerfußpunkte (9, 10) und der Arbeitsfußpunkt (8, 308) ein Dreieck aufspannen,
**dadurch gekennzeichnet,**
**dass** wenigstens zwei Schlitten der zwei Steuerschlitten (2, 3, 202, 203, 502) und des Arbeitsschlittens (4, 204, 304, 404) an einer gemeinsamen Führung (13, 213, 513) verfahrbar angeordnet sind.

2. Positioniereinheit nach Anspruch 1, **dadurch gekennzeichnet, dass** der Arbeitsfußpunkt (8, 308) an einer Fußplatte (16, 216) des Arbeitsschlittens (4, 204, 304, 404) angeordnet ist.

3. Positioniereinheit nach einem der vorhergehenden Ansprüche,
**dadurch gekennzeichnet, dass** am Arbeitsstellen-Ende (12) des Arbeitsarms (5, 305, 405) eine Arbeitseinheit (17, 217, 317, 417, 617) angeordnet ist.

4. Positioniereinheit nach einem der vorhergehenden Ansprüche,
**dadurch gekennzeichnet, dass** ein sich wenigstens mittelbar an der Führung (13, 213, 513) abstützender Stützarm (22, 23, 222, 223, 322, 622, 623), vorzugsweise ein erster und ein zweiter Stützarm (22, 23, 222, 223, 322, 622, 623), mit dem Arbeitsstellen-Ende (12) des Arbeitsarms (5, 305, 405) und/oder mit der Arbeitseinheit (17, 217, 317, 417, 617) verbunden, vorzugsweise angelenkt, ist.

5. Positioniereinheit nach einem der vorhergehenden Ansprüche,
**dadurch gekennzeichnet, dass** der erste und/oder der zweite Stützarm (22, 23, 222, 223, 322, 622, 623) mit dem Arbeitsarm (5) eine Parallelogramm-Mechanik bilden.

6. Positioniereinheit nach einem der vorhergehenden Ansprüche,
**dadurch gekennzeichnet, dass** der Stützarm (22, 23, 222, 223, 322, 622, 623) relativ zu wenigstens einem anderen Schlitten verfahrbar angeordnet ist.

7. Positioniereinheit nach einem der vorhergehenden Ansprüche,
**dadurch gekennzeichnet, dass** der Stützarm (22, 23, 222, 223, 322, 622, 623) als flexibles Zugelement, vorzugsweise als Metallband, ausgebildet ist.

8. Positioniereinheit nach einem der vorhergehenden Ansprüche,
**dadurch gekennzeichnet, dass** wenigstens zwei Schlitten an einem Basisschlitten angeordnet sind, wobei die wenigstens zwei Schlitten relativ zueinander verfahrbar sind.

9. Positioniereinheit nach einem der vorhergehenden Ansprüche,
**dadurch gekennzeichnet, dass** die Positioniereinheit (1, 101, 201, 301) eine Impulsentkopplungseinheit (537), insbesondere zur Entkopplung bzw. Kompensation eines Rückstoßimpulses, aufweist.

10. Positioniereinheit nach einem der vorhergehenden Ansprüche,
**dadurch gekennzeichnet, dass** die Positioniereinheit (1, 101, 201, 301) eine, vorzugsweise einstellbare, Gewichtskompensationseinheit (638) aufweist.

11. Positioniereinheit nach einem der vorhergehenden Ansprüche,
**dadurch gekennzeichnet, dass** wenigstens eine Anlenkung mittels eines vorgespannten Lagers ausgebildet ist.

12. Positioniereinheit nach einem der vorhergehenden Ansprüche,
**dadurch gekennzeichnet, dass** wenigstens ein Schlitten mittels eines Linearmotors verfahrbar ist, wobei vorzugsweise das stromdurchflossene Motorteil (535) des Linearmotors am Schlitten angeordnet ist.

13. Positioniereinheit nach einem der vorhergehenden Ansprüche,
**dadurch gekennzeichnet, dass** wenigstens zwei Schlitten gemeinsam eine Komponente der Positioniereinheit nutzen.

14. Positioniereinheit nach einem der vorhergehenden Ansprüche,
**dadurch gekennzeichnet, dass** die Positioniereinheit (1, 101, 201, 301) eine vorzugsweise als Rechnereinheit ausgebildete Steuerungseinheit aufweist, die ausgebildet ist, die Steuer- (2, 3, 202, 203, 502) und/oder Arbeitsschlitten (4, 204, 304, 404) derart entlang der Führung (13, 213, 513) zu verfahren, dass das Arbeitsstellen-Ende (12) zu einer vordefinierbaren Raum-Position innerhalb eines Arbeitsraumes (24) der Positioniereinheit (1, 101, 201, 301) gelangt.

## Claims

1. Positioning unit (1, 101, 201, 301), comprising two control carriages (2, 3, 202, 203, 502) and a working carriage (4, 204, 304, 404),
- the two control carriages (2, 3, 202, 203, 502) and the working carriage (4, 204, 304, 404) being movable on tracks that extend in parallel with one another,
- a working arm (5, 305, 405) being articulated on a working base point (8, 308) on the working carriage (4, 204, 304, 404) and a control arm (6, 7) being articulated on a respective control base point (9, 10) on the control carriages (2, 3, 202, 203, 502),
- the control arms (6, 7) being articulated on the working arm (5, 305, 405) at a control point (11) of said working arm, the control point (11) being spaced apart by a predefined lambda distance (d) from an end of the working arm (5, 305, 405) that forms a working point end (12) and faces away from the working base point (8, 308), and
- the two control base points (9, 10) and the working base point (8, 308) generating a triangle,
**characterized in that**
at least two carriages of the two control carriages (2, 3, 202, 203, 502) and of the working carriage (4, 204, 304, 404) are movably arranged on a common guide (13, 213, 513).

2. Positioning unit according to claim 1, **characterized in that** the working base point (8, 308) is arranged on a base plate (16, 216) of the working carriage (4, 204, 304, 404).

3. Positioning unit according to either of the preceding claims, **characterized in that** a working unit (17, 217, 317, 417, 617) is arranged at the working point end (12) of the working arm (5, 305, 405).

4. Positioning unit according to any of the preceding claims, **characterized in that** a support arm (22, 23, 222, 223, 322, 622, 623) supported at least indirectly on the guide (13, 213, 513), preferably a first and a second support arm (22, 23, 222, 223, 322, 622, 623), is connected to, preferably articulated on, the working point end (12) of the working arm (5, 305, 405) and/or to the working unit (17, 217, 317, 417, 617).

5. Positioning unit according to any of the preceding claims, **characterized in that** the first and/or the second support arm (22, 23, 222, 223, 322, 622, 623) form a parallelogram mechanism with the working arm (5).

6. Positioning unit according to any of the preceding claims, **characterized in that** the support arm (22, 23, 222, 223, 322, 622, 623) is arranged so as to be movable relative to at least one other carriage.

7. Positioning unit according to any of the preceding claims, **characterized in that** the support arm (22, 23, 222, 223, 322, 622, 623) is designed as a flexible tension element, preferably as a metal band.

8. Positioning unit according to any of the preceding claims, **characterized in that** at least two carriages are arranged on a base carriage, the at least two carriages being movable relative to one another.

9. Positioning unit according to any of the preceding claims, **characterized in that** the positioning unit (1, 101, 201, 301) has an impulse decoupling unit (537), in particular for decoupling or compensating for a recoil impulse.

10. Positioning unit according to any of the preceding claims, **characterized in that** the positioning unit (1, 101, 201, 301) has a, preferably adjustable, weight compensation unit (638).

11. Positioning unit according to any of the preceding claims, **characterized in that** at least one articulation is formed by means of a preloaded bearing.

12. Positioning unit according to any of the preceding claims, **characterized in that** at least one carriage can be moved by means of a linear motor, the motor part (535) of the linear motor through which current flows preferably being arranged on the carriage.

13. Positioning unit according to any of the preceding claims, **characterized in that** at least two carriages jointly use a component of the positioning unit.

14. Positioning unit according to any of the preceding claims, **characterized in that** the positioning unit (1, 101, 201, 301) has a control unit, preferably designed as a computer unit, which is designed to move the control carriages (2, 3, 202, 203, 502) and/or the working carriage (4, 204, 304, 404) along the guide (13, 213, 513) in such a way that the working point end (12) moves to a predefinable spatial position within a working space (24) of the positioning unit (1, 101, 201, 301).

## Revendications

1. Unité de positionnement (1, 101, 201, 301), comprenant deux coulisseaux de commande (2, 3, 202, 203, 502) et un coulisseau de travail (4, 204, 304, 404),
- dans laquelle les deux coulisseaux de commande (2, 3, 202, 203, 502) et le coulisseau de travail (4, 204, 304, 404) sont mobiles sur des trajets parallèles les uns aux autres,
- dans laquelle un bras de travail (5, 305, 405) est articulé à une base de travail (8, 308) sur le coulisseau de travail (4, 204, 304, 404) et respectivement un bras de commande (6, 7) est articulé respectivement à une base de commande (9, 10) sur les coulisseaux de commande (2, 3, 202, 203, 502),
- dans laquelle les bras de commande (6, 7) sont articulés à un point de commande (11) du bras de travail (5, 305, 405), le point de commande (11) étant disposé à une distance lambda prédéfinie (d) depuis une extrémité du bras de travail (5, 305, 405) formant une extrémité de point de travail (12) et opposée à la base de travail (8, 308), et
- dans laquelle les deux bases de commande (9, 10) et la base de travail (8, 308) forment un triangle,
**caractérisée en ce**
**qu'**au moins deux coulisseaux des deux coulisseaux de commande (2, 3, 202, 203, 502) et du coulisseau de travail (4, 204, 304, 404) sont disposés mobiles sur un guide commun (13, 213, 513).

2. Unité de positionnement selon la revendication 1, **caractérisée en ce que** la base de travail (8, 308) est disposée sur une plaque inférieure (16, 216) du coulisseau de travail (4, 204, 304, 404).

3. Unité de positionnement selon l'une des revendications précédentes, **caractérisée en ce qu'**une unité de travail (17, 217, 317, 417, 617) est disposée à l'extrémité de point de travail (12) du bras de travail (5, 305, 405).

4. Unité de positionnement selon l'une des revendications précédentes, **caractérisée en ce qu'**un bras de support (22, 23, 222, 223, 322, 622, 623) supporté au moins indirectement sur le guide (13, 213, 513), de préférence un premier et un second bras de support (22, 23, 222, 223, 322, 622, 623), est relié, de préférence articulé, à l'extrémité de point de travail (12) du bras de travail (5, 305, 405) et/ou à l'unité de travail (17, 217, 317, 417, 617).

5. Unité de positionnement selon l'une des revendications précédentes, **caractérisée en ce que** le premier et/ou le second bras de support (22, 23, 222, 223, 322, 622, 623) forment un mécanisme en parallélogramme avec le bras de travail (5).

6. Unité de positionnement selon l'une des revendications précédentes, **caractérisée en ce que** le bras de support (22, 23, 222, 223, 322, 622, 623) est disposé mobile par rapport à au moins un autre coulisseau.

7. Unité de positionnement selon l'une des revendications précédentes, **caractérisée en ce que** le bras de support (22, 23, 222, 223, 322, 622, 623) est réalisé sous forme d'élément de traction flexible, de préférence sous forme de bande métallique.

8. Unité de positionnement selon l'une des revendications précédentes, **caractérisée en ce qu'**au moins deux coulisseaux sont disposés sur un coulisseau de base, les au moins deux coulisseaux étant mobiles l'un par rapport à l'autre.

9. Unité de positionnement selon l'une des revendications précédentes, **caractérisée en ce que** l'unité de positionnement (1, 101, 201, 301) présente une unité de découplage d'impulsions (537), permettant en particulier de découpler ou de compenser une impulsion de recul.

10. Unité de positionnement selon l'une des revendications précédentes, **caractérisée en ce que** l'unité de positionnement (1, 101, 201, 301) présente une unité de compensation de poids (638) de préférence réglable.

11. Unité de positionnement selon l'une des revendications précédentes, **caractérisée en ce qu'**au moins une articulation est réalisée au moyen d'un palier précontraint.

12. Unité de positionnement selon l'une des revendications précédentes, **caractérisée en ce qu'**au moins un coulisseau est mobile au moyen d'un moteur linéaire, la partie moteur (535) du moteur linéaire traversée par le courant étant de préférence disposée sur le coulisseau.

13. Unité de positionnement selon l'une des revendications précédentes, **caractérisée en ce qu'**au moins deux coulisseaux utilisent conjointement un composant de l'unité de positionnement.

14. Unité de positionnement selon l'une des revendications précédentes, **caractérisée en ce que** l'unité de positionnement (1, 101, 201, 301) présente une unité de commande, de préférence réalisée comme une unité informatique, qui est conçue pour déplacer les coulisseaux de commande (2, 3, 202, 203, 502) et/ou de travail (4, 204, 304, 404) le long du guide (13, 213, 513) de telle sorte que l'extrémité de point de travail (12) est amenée vers une position spatiale prédéfinie dans un espace de travail (24) de l'unité de positionnement (1, 101, 201, 301).
